# EUROPÄISCHE PATENTANMELDUNG

(11) **EP 4 653 723 A1**
(43) Veröffentlichungstag der Anmeldung: **26.11.2025**
(21) Anmeldenummer: 25170672.7
(22) Anmeldetag: 15.04.2025
(51) Int. Cl.: F16G 1/16, B29D 29/08, F16G 1/28

(54) **RIEMEN MIT BESONDERER EIGNUNG IM TIEFTEMPERATURBEREICH UND VERFAHREN ZU DESSEN HERSTELLUNG**

(30) Priorität: 24.05.2024 DE 102024204806
(71) Anmelder: ContiTech Deutschland GmbH, 30175 Hannover (DE)
(72) Erfinder: Quass, Jan-Henning, 30175 Hannover (DE); Brocke, Stephan, 30175 Hannover (DE); Kucharczyk, Andre, 30175 Hannover (DE); Schöffer, Jannis, 30175 Hannover (DE)
(74) Vertreter: Preusser, Andrea

(57) **Zusammenfassung**

Die Erfindung betrifft einen Riemen (10), umfassend: i) einen Riemenkörper (12) mit einer Riemenkörpergrundlage (14), umfassend in der Riemenkörpergrundlage (14) einen oder mehrere Zugträger (16), wobei der eine oder die mehreren Zugträger (16) jeweils zumindest teilweise in ein erstes Kunststoffmaterial eingebettet sind, wobei das erste Kunststoffmaterial einen ersten Kunststoff umfasst, der ausgewählt ist aus der Gruppe bestehend aus thermoplastischen Elastomeren, und ii) eine für den Kontakt mit Antriebselementen vorgesehene und mit dem Riemenkörper (12) verbundene Kontaktstruktur (18), wobei die Kontaktstruktur (18) zumindest teilweise aus einem vom ersten Kunststoffmaterial verschiedenen zweiten Kunststoffmaterial besteht, wobei das zweite Kunststoffmaterial einen zweiten Kunststoff umfasst, der ausgewählt ist aus der Gruppe bestehend aus thermoplastischen Polyurethanen.

## Beschreibung

Die Erfindung betrifft einen Riemen, insbesondere für den Einsatz bei tiefen Temperaturen, ein Verfahren zur Herstellung eines solchen Riemens und die Verwendung eines entsprechenden Riemens zur Steigerung der Betriebssicherheit und Lebensdauer riemengetriebener Vorrichtungen bei tiefen Temperaturen. Offenbart wird zudem eine Vorrichtung umfassend einen solchen Riemen als Treibriemen.

Der Einsatz von Riemen bei der Kraftübertragung gehört in vielen Bereichen der Technik seit Jahrzehnten zum Stand der Technik, wobei insbesondere sogenannte Zahnriemen zum Einsatz kommen, welche durch eine profilierte Oberfläche eine effiziente mechanische Kraftübertragung erlauben und entsprechend besonders gut für den Einsatz als Treibriemen geeignet sind. Beispiele für Riemen und generelle Informationen zum technologischen Hintergrund sind beispielsweise in der WO 2020233863 A1 oder der EP 3670960 B1 offenbart.

Im Zuge der fortschreitenden technologischen Entwicklung werden auch an die eingesetzten Riemen immer stärkere Anforderungen gestellt. Insbesondere besteht ein steter Bedarf nach leistungsfähigen Riemen, welche insbesondere für den Einsatz in Hochleistungsanwendungen oder unter besonders schwierigen Umgebungsbedingungen geeignet sind.

Eine besondere Relevanz haben dabei insbesondere Riemen aus dem Matrixwerkstoff Polyurethan, welche in ihrem Inneren ein Zugelement als Kraftübertragungsmedium umfassen. Entsprechende Standardriemen können regelmäßig problemlos in Temperaturbereichen von ca. -10 bis 60 °C eingesetzt werden. Bei tieferen Temperaturen, wie sie bspw. in Tieftemperatur-Logistikhallen vorliegen, sind diese Standardriemen in vielen Fällen aber nicht ohne weiteres einsetzbar. Insbesondere bei Tieftemperaturanwendungen, die im Start-/Stopp-Betrieb arbeiten, können entsprechende Standardriemen zu einer nachteilig verringerten Haltbarkeit führen, insbesondere wenn die tiefen Temperaturen in Verbindung mit kleinen Umlenkdurchmessern einhergehen, was zu Rissen in der Rückenstruktur der Riemen führen kann, welche durch den temperaturbedingten Verlust der Flexibilität begünstigt werden. Die Folge ist potentiell ein Gesamtversagen des Riemens, wodurch es bedingt durch den notwendigen Riemenwechsel zu unerwünschten Ausfallzeiten der betroffenen Vorrichtungen kommt, welche als ebenso nachteilig empfunden werden, wie die mit dem Austausch verbundenen Kosten und der anfallende Abfall.

Um diesem Problem zu begegnen, werden im Stand der Technik zuweilen spezifische Polyurethane als Matrixwerkstoff eingesetzt. Die allgemeine Faustregel im Bereich der Technik ist dabei, dass die Shore-Härte des Polyurethans umso geringer gewählt werden sollte, je tiefer die Einsatztemperatur ist. Diese verringerte Shore-Härte geht jedoch wiederum mit einer Verminderung der Belastbarkeit einher, was ebenfalls in einem unerwünschten Versagen der Riemen unter Belastung resultieren kann, insbesondere bei Zahnriemen.

Die primäre Aufgabe der vorliegenden Erfindung war es, die Nachteile des Standes der Technik auszuräumen oder zumindest zu verringern.

Insbesondere war es die Aufgabe der vorliegenden Erfindung, einen vorteilhaften Riemen, insbesondere Zahnriemen, anzugeben, welcher besonders für den Einsatz unter tiefen Temperaturen, bspw. bei der Tieftemperatur-Lagerlogistik, geeignet ist.

Hierbei war es eine Aufgabe der vorliegenden Erfindung, dass die anzugebenden Zahnriemen auch bei tiefen Temperaturen eine vorteilhafte Flexibilität aufweisen sollten und gleichzeitig eine hohe intrinsische Belastbarkeit zeigen sollten, sodass selbst bei tiefen Temperaturen und hohen mechanischen Belastungen eine vorteilhafte Lebensdauer erreicht werden kann.

Es war eine Aufgabe der vorliegenden Erfindung, dass durch den Einsatz des anzugebenden Riemens die Ausfallzeiten von Riemen-angetriebenen Vorrichtungen, insbesondere beim Einsatz bei tiefen Temperaturen, verringert werden können sollten, wobei es eine wünschenswerte Vorgabe war, dass durch den Einsatz des anzugebenden Riemens zudem die Kosten für Wartungsmaterial sowie der anfallende Abfall verringert werden können sollten.

Es war eine weitere Aufgabe der vorliegenden Erfindung, ein Verfahren bereitzustellen, mit dem die anzugebenden Riemen in zeit- und kosteneffizienter Art und Weise hergestellt werden können.

Darüber hinaus war es eine Aufgabe der vorliegenden Erfindung, eine vorteilhafte Verwendung für die anzugebenden Riemen bereitzustellen.

Es war eine sekundäre Aufgabe der vorliegenden Erfindung, zudem eine vorteilhafte Vorrichtung bereitzustellen, welche durch den Einsatz der anzugebenden Riemen besonders für den Einsatz bei tiefen Temperaturen, insbesondere Temperaturen unterhalb von -10 °C, geeignet ist.

Die Erfinder der vorliegenden Erfindung haben nunmehr gefunden, dass sich die vorstehend beschriebenen Aufgaben überraschenderweise lösen lassen, wenn ein Riemenkörper mit darin eingebetteten Zugträgern eingesetzt wird, der zumindest teilweise aus einem thermoplastischen Elastomer ausgebildet ist, wenn die für den Kontakt mit den Antriebselementen vorgesehene Seite mit einer Kontaktstruktur ausgerüstet wird, welche zumindest teilweise aus einem thermoplastischen Polyurethan besteht, sodass ein Verbundprodukt erhalten wird, wie es in den Ansprüchen definiert ist.

Die Erfinder der vorliegenden Erfindung haben gefunden, dass thermoplastische Elastomere, insbesondere thermoplastische Polyamid-Elastomere, beim Einsatz im Riemenrücken auch bei tiefen Temperaturen ausreichend elastisch sind, sodass der erfindungsgemäße Riemen eine vorteilhaft verringerte Rückenrissneigung in Vergleich zu einem aus dem Stand der Technik bekannten Riemen aufweist, wodurch sich insbesondere bei kleinen Umlenkdurchmessern große Haltbarkeitsvorteile ergeben. Die Ausbildung der Kontaktstruktur aus thermoplastischem Polyurethan gewährleistet dabei ein vorteilhaftes Kraftübertragungsverhalten zwischen dem Riemen und der Antriebseinheit, sodass der erfindungsgemäße Riemen über die Kontaktstruktur gute mechanische Eigenschaften aufweist, insbesondere eine vorteilhafte Belastbarkeit, und zur Übertragung bzw. Aufnahme der mechanischen Kräfte besonders geeignet ist, was nach Einschätzung der Erfinder beim Einsatz eines einkomponentigen Riemens aus lediglich thermoplastischem Elastomer nicht gegeben wäre.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren, Verwendungen und Vorrichtungen ergeben sich aus den Merkmalen bevorzugter Riemen.

Insbesondere bevorzugte Ausführungsformen der Erfindung sind in den Ausführungsbeispielen offenbart. Besonders bevorzugte Ausführungsformen der Erfindung weisen entsprechend zwei oder mehr, bevorzugt drei oder mehr, ganz besonders bevorzugt vier oder mehr, der nachfolgend offenbarten bevorzugten Merkmale der Erfindung auf, welche auch in den Ausführungsbeispielen realisiert sind.

Die Erfindung betrifft insbesondere einen Riemen, umfassend:
i) einen Riemenkörper mit einer Riemenkörpergrundlage, umfassend in der Riemenkörpergrundlage einen oder mehrere Zugträger, wobei der eine oder die mehreren Zugträger jeweils zumindest teilweise in ein erstes Kunststoffmaterial eingebettet sind,
   wobei das erste Kunststoffmaterial einen ersten Kunststoff umfasst, der ausgewählt ist aus der Gruppe bestehend aus thermoplastischen Elastomeren,
   und
ii) eine für den Kontakt mit Antriebselementen vorgesehene und mit dem Riemenkörper verbundene Kontaktstruktur, wobei die Kontaktstruktur zumindest teilweise aus einem vom ersten Kunststoffmaterial verschiedenen zweiten Kunststoffmaterial besteht,
   wobei das zweite Kunststoffmaterial einen zweiten Kunststoff umfasst, der ausgewählt ist aus der Gruppe bestehend aus thermoplastischen Polyurethanen.

Die Erfindung betrifft einen Riemen, welcher infolge seiner spezifischen Ausgestaltung insbesondere für den Einsatz bei tiefen Temperaturen, insbesondere unterhalb von - 10 °C geeignet ist.

Riemen im Allgemeinen und Zahnriemen im Speziellen sind dem Fachmann ausgehend von seinem allgemeinen Fachwissen umfassend bekannt, wobei der Fachmann mit dem prinzipiellen Aufbau, welcher regelmäßig auf gummierten Zugträgern basiert, ebenfalls vertraut ist.

Nach Einschätzung der Erfinder eignet sich die vorteilhafte Konstruktion der erfindungsgemäßen Riemen prinzipiell auch für den Einsatz in sogenannten Flachriemen, bei denen die für den Kontakt mit den Antriebselementen vorgesehene Oberfläche des Riemens im Wesentlichen flach ausgebildet ist. Nach Einschätzung der Erfinder eignet sich das erfinderische Konzept aber vor allem für die Umsetzung mit Zahnriemen, sodass für sämtliche nachfolgenden Offenbarungen jeweils die Umsetzung in der Variante als Zahnriemen besonders bevorzugt ist. Für die weit überwiegende Zahl der Ausführungsformen bevorzugt ist somit ein erfindungsgemäßer Riemen, wobei der Riemen ein Zahnriemen ist, wobei die Kontaktstruktur eine Vielzahl von auf der Zahnseite des Riemenkörpers angeordneten Riemenzähnen umfasst, wobei die Riemenzähne bezogen auf deren Anzahl zumindest teilweise, bevorzugt überwiegend, besonders bevorzugt im Wesentlichen vollständig, aus dem ersten Kunststoffmaterial bestehen. Besonders bevorzugt ist dabei ein erfindungsgemäßer Riemen, wobei der Zahnriemen genau ein Zahnseite aufweist, d.h. lediglich einseitig mit Zähnen versehen ist. Besonders bevorzugt ist dabei zusätzlich oder alternativ auch ein erfindungsgemäßer Riemen, wobei der Zahnriemen, eine Vielzahl von im Wesentlichen gleichartigen Riemenzähnen umfasst, und/oder wobei der Zahnriemen eine Vielzahl von im Wesentlichen äquidistant zum jeweils nächsten Riemenzahn angeordnete Riemenzähne umfasst.

Im Rahmen der vorliegenden Erfindung ist der Ausdruck "Riemenzähne" dabei breit auszulegen, sodass unter Riemenzähnen prinzipiell solche erhabenen Strukturen auf der Zahnseite des Zahnriemens zu verstehen sind, welche einer verbesserten mechanischen Kraftübertragung mit den Antriebselementen dienen, insbesondere mittels Formschluss, bspw. neben Riemenzähnen auch Keilrippen.

Prinzipiell kann der erfindungsgemäße Riemen als umlaufender Zahnriemen ausgeführt werden. Infolge der bevorzugten Herstellung, wie sie nachfolgend offenbart ist, ist die Umsetzung als endlich extrudierter Riemen für die erfindungsgemäßen Riemen besonders bevorzugt. Zwar lassen sich solche endlich extrudierten Riemen ggf. an den Enden zu einem endlosen Riemen verschweißen, jedoch ist die Verwendung für eine lineare Bewegung im Rahmen der vorliegenden Erfindung besonders relevant. Beispielhaft ist somit ein erfindungsgemäßer Riemen, wobei der Riemen ein bandförmiger oder umlaufender Zahnriemen ist, bevorzugt ein bandförmiger Zahnriemen.

Die Basis des erfindungsgemäßen Riemens bildet in Übereinstimmung mit dem üblichen Aufbau der Riemenkörper. Zentrales Element des Riemenkörpers ist dabei die sogenannte Riemenkörpergrundlage, in der ein oder mehrere Zugträger vorliegen, welche zumindest teilweise in einem ersten Kunststoffmaterial eingebettet sind. Zumindest theoretisch wäre es dabei denkbar, dass die Riemenkörpergrundlage neben den gummierten Zugträgern auch noch weitere Lagen umfasst, bspw. auf der im Einsatz außen liegenden Seite, um bspw. als Schutzschicht zu fungieren. Nach Einschätzung der Erfinder ist es jedoch für im Wesentlichen alle Ausführungsformen bevorzugt, wenn der Riemenkörper möglichst weitgehend aus der spezifischen Riemenkörpergrundlage besteht, insbesondere da diese durch die spezifische Materialauswahl besonders resistent für bei tiefen Temperaturen an der Krümmungsseite auftretende Risse ist. Denkbar ist somit ein erfindungsgemäßer Riemen, wobei der Riemenkörper neben der Riemenkörpergrundlage eine auf der von der Kontaktstruktur des Riemens abgewandten Seite angeordnete Riemenaußenlage umfasst. Bevorzugt ist in jedoch alternativ ein erfindungsgemäßer Riemen, wobei die von der Kontaktstruktur des Riemens abgewandte Oberfläche des Riemenkörpers durch die Riemenkörpergrundlage gebildet wird, wobei die von der Kontaktstruktur des Riemens abgewandte Oberfläche des Riemenkörpers durch das erste Kunststoffmaterial gebildet wird.

Bevorzugt ist in jedem Fall zusätzlich oder alternativ ein erfindungsgemäßer Riemen, wobei der Riemenkörper zu einem Volumenanteil von 80 % oder mehr, bevorzugt von 85 % oder mehr, besonders bevorzugt von 90 % oder mehr, ganz besonders bevorzugt von 95 % oder mehr, insbesondere bevorzugt von 99 % oder mehr, aus der Riemenkörpergrundlage besteht, bezogen auf das Volumen des Riemenkörpers.

Das Grundmaterial der Riemenkörpergrundlage wird im Rahmen der vorliegenden Erfindung als erstes Kunststoffmaterial bezeichnet und dient dazu, die Zugträger einzubetten. Der Fachmann versteht insoweit, dass es sich bei dem ersten Kunststoffmaterial entsprechend um eine einstückige, bevorzugt solide Kunststoffmatrix handelt und bspw. nicht um ein textiles Flächengebilde. Mit anderen Worten handelt es sich somit um einen erfindungsgemäßen Riemen, wobei zumindest die Riemenkörpergrundlage, bevorzugt der gesamte Riemenkörper, ein solider, nicht poröser Körper ist.

Es kann als Vorteil der erfindungsgemäßen Riemen gesehen werden, dass diese hinsichtlich der einzusetzenden Zugträger sehr flexibel sind und bezüglich der Zugträger auf solche Zugträger zurückgegriffen werden kann, welche aus dem Stand der Technik für Riemen bekannt sind, wobei insbesondere auch hinsichtlich der Zahl und Anordnung der Zugträger auf übliche Konstruktionen zurückgegriffen werden kann. Bevorzugt ist insoweit ein erfindungsgemäßer Riemen, wobei der Riemenkörper zwei oder mehr, bevorzugt drei oder mehr, besonders bevorzugt vier oder mehr, Zugträger umfasst. Bevorzugt ist zusätzlich oder alternativ ein erfindungsgemäßer Riemen, wobei der oder die Zugträger im Riemenkörper in Bahnrichtung und/oder Umfangsrichtung verlaufen, bevorzugt über die gesamte Länge und/oder Umfang des Riemenkörpers.

In den Experimenten der Erfinder hat sich gezeigt, dass der Einsatz von metallischen Korden als Zugträger, insbesondere verzinkten Stahlkorden, im Rahmen der vorliegenden Erfindung besonders vorteilhaft ist. Die metallischen Korde zeigen zu den in der Riemenkörpergrundlage eingesetzten thermoplastischen Elastomeren eine vorteilhafte Kompatibilität und resultieren, nach Einschätzung der Erfinder, in der Kombination in einem besonders vorteilhaften Verbundmaterial, welches insbesondere über eine vorteilhafte mechanische Belastbarkeit verfügt, insbesondere auch bei tiefen Temperaturen. Bevorzugt ist entsprechen ein erfindungsgemäßer Riemen, wobei die Zugträger ausgewählt sind aus der Gruppe bestehend aus metallischen Korden, bevorzugt Stahlkorden, besonders bevorzugt verzinkten oder vermessingten Stahlkorden.

Ein wesentlicher Aspekt der vorliegenden Erfindung ist die Wahl des ersten Kunststoffmaterials, nämlich dass dieses ein thermoplastisches Elastomer ist. Zumindest theoretisch wäre es denkbar, dass das erste Kunststoffmaterial neben dem thermoplastischen Elastomer auch weitere Kunststoffbestandteile umfasst, bei denen es sich vielleicht nicht um thermoplastische Elastomere, sondern bspw. um klassische Thermoplasten handelt. Entsprechende Beimischungen können zweckmäßig sein, um die physikalisch-chemischen sowie mechanischen Eigenschaften des ersten Kunststoffmaterials an die jeweiligen Anwendungserfordernisse anzupassen. Der Fachmann versteht jedoch, dass es für im Wesentlichen alle Anwendungsfälle bevorzugt ist, die sich aus dem Einsatz des thermoplastischen Elastomers ergebenden Vorteile dahingehend auszunutzen, dass dieses in einem hohen Massenanteil im Kunststoffmaterial eingesetzt wird.

Bevorzugt ist ein erfindungsgemäßer Riemen, wobei das erste Kunststoffmaterial zu einem Massenanteil von 80 % oder mehr, bevorzugt von 90 % oder mehr, besonders bevorzugt von 95 % oder mehr, ganz besonders bevorzugt von 98 % oder mehr, insbesondere bevorzugt von im Wesentlichen 100 %, aus dem ersten Kunststoff besteht, bezogen auf die Masse des ersten Kunststoffmaterials.

Thermoplastische Elastomere, welche häufig mit dem Kürzel TPE abgekürzt werden, sind dem Fachmann im Bereich der Technik grundsätzlich bekannt und von verschiedenen Anbietern kommerziell erhältlich. Solche thermoplastischen Elastomere weisen bei Raumtemperatur mechanische Eigenschaften auf, die mit denen typischer Elastomere, insbesondere Gummiwerkstoffen, vergleichbar sind, insbesondere die Eigenschaft zur elastischen Verformung. Der Zusatz "thermoplastisch" deutet dabei jedoch an, dass die TPE-Kunststoffe, anders als klassische Elastomere, bei erhöhten Temperaturen ein thermoplastisches Verhalten zeigen, sich bei hohen Temperaturen entsprechend plastisch verformen lassen. Thermoplastische Elastomere sind häufig Copolymere oder Block-Copolymere, bei welchen die einzelnen Copolymer-Bestandteile für das unterschiedliche Verhalten bei verschiedenen Temperaturen verantwortlich sind. Unter den möglichen thermoplastischen Elastomeren haben die Erfinder insbesondere den Einsatz von thermoplastischen Polyamid-Elastomeren, welche mit dem Kürzel "TPE-A" abgekürzt werden und thermoplastischen Elastomeren auf Urethanbasis, deren Abkürzung "TPE-U" ist, als besonders geeignet identifiziert, wobei insbesondere die thermoplastischen Polyamid-Elastomere, insbesondere die Polyether-Block-Amid-Copolymere als besonders günstig identifiziert wurden. Neben ausgezeichneten mechanischen Eigenschaften, insbesondere einer vorteilhaften Elastizität auch bei tiefen Temperaturen, wurde dabei insbesondere eine besonders vorteilhafte Verbundfestigkeit zu der aufzubringenden Kontaktstruktur identifiziert, sodass durch den Einsatz dieser Materialien besonders gute Haltbarkeiten erzielt werden können, sowohl hinsichtlich der Anfälligkeit für Risse in der Rückenstruktur der Riemen als auch dem Auftreten von Verbundfehlern an dem Übergang zwischen der Riemenkörpergrundlage und der Kontaktstruktur. Bevorzugt ist ein erfindungsgemäßer Riemen, wobei der erste Kunststoff ausgewählt ist aus der Gruppe bestehend aus thermoplastischen Polyamidelastomeren (TPE-A) und thermoplastischen Elastomeren auf Urethanbasis (TPE-U), bevorzugt aus der Gruppe bestehend aus thermoplastischen Polyamidelastomeren, besonders bevorzugt aus der Gruppe bestehend aus thermoplastischen Polyether-Block-Amid-Copolymeren.

Ein weiterer wesentlicher Aspekt der vorliegenden Erfindung ist, dass der Riemen auf der Seite, die im späteren Einsatz für den Kontakt mit den Antriebselementen, bspw. Zahnrädern, vorgesehen ist, eine Struktur umfasst, die im Rahmen der vorliegenden Erfindung zum Zwecke einer einfachen Identifikation als Kontaktstruktur bezeichnet wird. Wie vorstehend erläutert, kann es sich bei dieser Kontaktstruktur zwar auch um eine flache Lage handeln, jedoch ist der Einsatz von Riemenzähnen für im Wesentlichen aller Ausführungsformen bevorzugt. Ein wesentlicher Aspekt der vorliegenden Erfindung ist darin zu sehen, dass die Kontaktstruktur aus einem Kunststoffmaterial besteht, welches von dem ersten Kunststoffmaterial verschieden ist, welches in der Riemenkörpergrundlage eingesetzt wird. Dieses Kunststoffmaterial wird im Rahmen der vorliegenden Erfindung als "zweites Kunststoffmaterial" bezeichnet und ist erfindungsgemäß ausgewählt aus der Gruppe bestehend aus thermoplastischen Polyurethanen. Bevorzugt sind dabei thermoplastische Polyurethane im engeren Sinne, also Polyurethane die keine thermoplastischen Elastomere sondern reine Thermoplasten sind. Polyurethane sind dem Fachmann dabei grundsätzlich bekannt und als thermoplastischer Werkstoff von zahlreichen Herstellern kommerziell erhältlich. Dem thermoplastischen Polyurethan kommt im Rahmen der vorliegenden Erfindung insbesondere die Aufgabe zu, auf der für den Kontakt mit den Antriebselementen vorgesehenen Seite eine vorteilhafte mechanische Belastbarkeit sicherzustellen.

Auch wenn es beim zweiten Kunststoffmaterial wiederum möglich ist, dass thermoplastische Polyurethan auch mit weiteren Kunststoffmaterialien zu kombinieren, ist es mit Blick auf möglichst vorteilhafte erfindungsgemäße Riemen für im Wesentlichen alle Ausführungsformen bevorzugt, das zweite Kunststoffmaterial möglichst weitgehend aus dem zweiten Kunststoff auszubilden. Bevorzugt ist ein erfindungsgemäßer Riemen, wobei das zweite Kunststoffmaterial zu einem Massenanteil von 80 % oder mehr, bevorzugt von 90 % oder mehr, besonders bevorzugt von 95 % oder mehr, ganz besonders bevorzugt von 98 % oder mehr, insbesondere bevorzugt von im Wesentlichen 100 %, aus dem zweiten Kunststoff besteht, bezogen auf die Masse des zweiten Kunststoffmaterials.

Anknüpfend an diese Überlegung ist es nach Einschätzung der Erfinder dabei auch zielführend, die Kontaktstruktur wiederum möglichst weitgehend aus dem zweiten Kunststoffmaterial auszubilden, was im Falle des Einsatzes von Riemenzähnen in der Kontaktstruktur insbesondere bedeutet, dass die Riemenzähne, bezogen auf ihre Anzahl, möglichst weitgehend aus dem zweiten Kunststoffmaterial ausgebildet werden sollen. Bevorzugt ist ein erfindungsgemäßer Riemen, wobei die Kontaktstruktur zu einem Massenanteil von 80 % oder mehr, bevorzugt von 85 % oder mehr, besonders bevorzugt von 90 % oder mehr, ganz besonders bevorzugt von 95 % oder mehr, insbesondere bevorzugt von im Wesentlichen 100 %, aus dem zweiten Kunststoffmaterial bestehet, bezogen auf die Gesamtmasse der Kontaktstruktur. Bevorzugt ist zusätzlich oder alternativ ein erfindungsgemäßer Riemen, wobei die Riemenzähne zu einem Anteil von 80 % oder mehr, bevorzugt von 85 % oder mehr, besonders bevorzugt von 90 % oder mehr, ganz besonders bevorzugt von 95 % oder mehr, insbesondere bevorzugt von im Wesentlichen 100 %, aus dem zweiten Kunststoffmaterial bestehen, bezogen auf die Gesamtzahl der Riemenzähne.

Auch wenn es prinzipiell denkbar wäre, die erfindungsgemäß vorgesehene Verbindung zwischen dem Riemenkörper und der Kontaktstruktur mit anderen Mitteln zu erzeugen, bspw. durch Verbindungselemente, ist es nach Einschätzung der Erfinder besonders bevorzugt, eine stoffschlüssige Verbindung vorzusehen. Dies ist nicht nur mit Blick auf die resultierende Verbundfestigkeit an der Verbindungsfläche vorteilhaft, sondern auch mit Blick auf eine zeit- und kosteneffiziente Herstellbarkeit, da sich eine entsprechende stoffschlüssige Verbindung in vorteilhafter Weise durch Extrusionsbeschichtung der Riemenkörpergrundlage mit dem verflüssigten thermoplastischen Polyurethan erhalten lässt, wie es nachfolgend weiter offenbart wird. Ohne an diese Theorie gebunden sein zu wollen, gehen die Erfinder davon aus, dass es durch die Beschichtung der Riemenkörpergrundlage mit dem heißen, extrudierten zweiten Kunststoffmaterial lokal zu einer Aufschmelzung des thermoplastischen Elastomers kommt, wodurch eine vorteilhafte Verbundfestigkeit zwischen den lokal beidseitig aufgeschmolzenen Schichten begünstigt wird. Bevorzugt ist ein erfindungsgemäßer Riemen, wobei die Kontaktstruktur stoffschlüssig mit dem Riemenkörper verbunden ist, bevorzugt mit der Riemenkörpergrundlage, wobei die stoffschlüssige Verbindung bevorzugt herstellbar ist durch Extrusionsbeschichtung der Riemenkörpergrundlage mit dem zweiten Kunststoffmaterial.

In der Ausgestaltung als Zahnriemen besteht grundsätzlich die Möglichkeit, die isolierten Riemenzähne aus dem zweiten Kunststoffmaterial entlang der Bahnrichtung des Riemens voneinander beabstandet und nicht durch das entsprechende Kunststoffmaterial miteinander verbunden sind. Die Erfinder haben jedoch gefunden, dass es besonders vorteilhaft ist, wenn die Riemenzähne der Kontaktstruktur untereinander, zumindest teilweise, bevorzugt überwiegend, insbesondere bevorzugt sämtlich mit einer dünnen Materialschicht aus dem zweiten Kunststoffmaterial verbunden sind, welche sich entsprechend auf der Oberfläche des Riemenkörpers erstreckt. Die entsprechende Beschichtung wird im Rahmen der vorliegenden Erfindung als Zahnverbindungslage bezeichnet. Unter Einsatz einer solchen Zahnverbindungslage lassen sich nicht nur besonders gute mechanische Belastbarkeiten der aufgebrachten Riemenzähne realisieren, sondern es ergibt sich auch die Möglichkeit zu einer besonders zeit- und kosteneffizienten Fertigung, nämlich indem die Riemenzähne mit einem formgebenden Werkzeug besonders einfach auf der Oberfläche des Riemenkörpers aufgeformt werden können, auf dem zuvor eine durchgehende Verbindungslage aufgebracht wurde. Bevorzugt ist ein erfindungsgemäßer Riemen, wobei die Kontaktstruktur eine Zahnverbindungslage umfasst, wobei die Zahnverbindungslage die Riemenzähne mit anderen Riemenzähnen verbindet, und wobei die Zahnverbindungslage aus dem zweiten Kunststoffmaterial besteht. Bevorzugt ist zusätzlich oder alternativ ein erfindungsgemäßer Riemen, wobei die Zahnverbindungslage im Bereich zwischen den Riemenzähnen eine mittlere Dicke im Bereich von 0,05 bis 5 mm, bevorzugt im Bereich von 0,1 bis 4 mm, besonders bevorzugt im Bereich von 0,2 bis 3 mm, aufweist.

Der Fachmann versteht, dass die Zugträger, analog zu typischen Aufbauen im Stand der Technik, im Regelfall sehr weitgehend und bevorzugt im Wesentlichen vollständig im Inneren des Riemens angeordnet sind. In einer Ausgestaltung ist es hierfür möglich, die Zugträger im Wesentlichen vollständig in der Riemenkörpergrundlage, d. h., insbesondere im ersten Kunststoffmaterial einzubetten. Die Erfinder haben jedoch gefunden, dass sich eine besonders bevorzugte Ausgestaltung beim Einsatz der wie vorstehend beschriebenen Zahnverbindungslage erhalten lässt, wenn die Zugträger auf der in Richtung der Kontaktstruktur weisenden Seite nicht vollständig mit dem ersten Kunststoffmaterial bedeckt sind, sodass die vollständige Verschließung der Zugträger im Inneren des Riemens erst durch das Aufbringen der Zahnverbindungslage erfolgt, welche infolgedessen zumindest eine kleine Kontaktfläche mit den Zugträgern aufweist. Für entsprechende Ausgestaltung haben sich besonders vorteilhafte Gesamteigenschaften, sowohl in der Haltbarkeit im Verbindungsbereich als auch beim mechanischen Kraftübertrag von den Antriebselementen in den Riemen gezeigt. Bevorzugt ist ein erfindungsgemäßer Riemen, wobei der oder die Zugträger jeweils zu 80 % oder mehr, bevorzugt zu 85 % oder mehr, besonders bevorzugt zu 90 % oder mehr, ganz besonders bevorzugt zu 95 % oder mehr, insbesondere bevorzugt zu 99 % oder mehr, in dem ersten Kunststoffmaterial eingebettet sind, bezogen auf die Gesamtoberfläche des oder der Zugträger. Bevorzugt ist zusätzlich oder alternativ ein erfindungsgemäßer Riemen, wobei die Zahnverbindungslage den oder die in das erste Kunststoffmaterial eingebetteten Zugträger kontaktiert, bevorzugt derart, dass der eine oder die mehreren Zugträger jeweils vollständig in dem ersten Kunststoffmaterial und dem zweiten Kunststoffmaterial eingebettet sind.

Die Erfinder schlagen vor, dass die Materialauswahl für das erste bzw. zweite Kunststoffmaterial zielführenderweise insbesondere im Lichte der Härte der jeweiligen Materialien erfolgen kann, wobei es nach Einschätzung der Erfinder zielführend ist, das erste Kunststoffmaterial eher mit geringerer Härte auszuführen als das zweite Kunststoffmaterial, wobei es nach Einschätzung der Erfinder gerade für anspruchsvolle Anwendungen vorteilhaft sein kann, hier einen möglichst großen Gradienten der Härte vorzusehen. Bevorzugt ist folglich ein erfindungsgemäßer Riemen, wobei das erste Kunststoffmaterial eine Shore A Härte von 90 oder weniger, bevorzugt von 85 oder weniger, besonders bevorzugt von 80 oder weniger, aufweist.

Bevorzugt ist ein erfindungsgemäßer Riemen, wobei das zweite Kunststoffmaterial eine Shore A Härte von 80 oder mehr, bevorzugt von 85 oder mehr, besonders bevorzugt von 90 oder mehr, insbesondere bevorzugt von 95 oder mehr, aufweist.

Die Erfindung betrifft überdies ein Verfahren zur Herstellung eines erfindungsgemäßen Riemens, insbesondere eines Zahnriemens, umfassend die Verfahrensschritte:
a) Herstellen oder Bereitstellen einer Riemenkörpergrundlage, umfassend einen oder mehrere Zugträger, wobei der eine oder die mehreren Zugträger zumindest teilweise in dem ersten Kunststoffmaterial eingebettet sind,
b) Extrudieren des zweiten Kunststoffmaterials auf die Oberfläche der Riemenkörpergrundlage, bevorzugt zur Ausbildung einer Vielzahl von auf der Zahnseite des Riemenkörpers angeordneten Riemenzähnen.

Im erfindungsgemäßen Verfahren erfolgt die Herstellung erfindungsgemäßer Riemen derart, dass zunächst von der Riemenkörpergrundlage ausgegangen wird, welche anschließend mit dem zweiten Kunststoffmaterial beschichtet wird, wobei in bevorzugter Ausgestaltung Riemenzähne mit einem aus der extrudierten Schicht mit einem formgebenden Werkzeug ausgeformt werden.

Bevorzugt ist dabei ein erfindungsgemäßes Verfahren, wobei die Riemenkörpergrundlage hergestellt wird durch Ummanteln des einen oder der mehreren Zugträger mit dem ersten Kunststoffmaterial.

Bevorzugt ist zusätzlich oder alternativ auch ein erfindungsgemäßes Verfahren, wobei das Extrudieren des zweiten Kunststoffmaterials auf die Oberfläche der Riemenkörpergrundlage zumindest teilweise auf das erste Kunststoffmaterial erfolgt, wobei das erste Kunststoffmaterial bevorzugt in Folge der Temperatur des extrudierten zweiten Kunststoffmaterials oberflächlich aufgeschmolzen wird.

Bevorzugt ist ein erfindungsgemäßes Verfahren, wobei das Ausbilden der Vielzahl von Riemenzähnen das Formen des extrudierten zweiten Kunststoffmaterials mit einem formgebenden Werkzeug umfasst.

Bevorzugt ist ein erfindungsgemäßes Verfahren, wobei das Extrudieren des zweiten Kunststoffmaterials auf die Oberfläche der Riemenkörpergrundlage so erfolgt, dass zwischen den Riemenzähnen eine Zahnverbindungslage ausgebildet wird, wobei die Zahnverbindungslage die Riemenzähne mit anderen Riemenzähnen verbindet.

Offenbart wird zudem eine Vorrichtung, umfassend als Treibriemen einen Zahnriemen nach Anspruch 1.

Bevorzugt ist eine wie vorstehend offenbarte Vorrichtung, wobei die Vorrichtung ein Linearmodul ist.

Offenbart wird auch die Verwendung eines erfindungsgemäßen Zahnriemens als Treibriemen in einer Vorrichtung zur Steigerung der Betriebssicherheit und Lebensdauer bei Temperaturen von weniger als -10 °C, bevorzugt weniger als -15 °C.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: ein erfindungsgemäßer Riemen in unterschiedlichen Querschnittsansichten in einer ersten bevorzugten Ausführungsform;
- Fig. 2: ein erfindungsgemäßer Riemen in unterschiedlichen Querschnittsansichten in einer zweiten bevorzugten Ausführungsform; und
- Fig. 3: ein erfindungsgemäßer Riemen in unterschiedlichen Querschnittsansichten in einer dritten bevorzugten Ausführungsform.

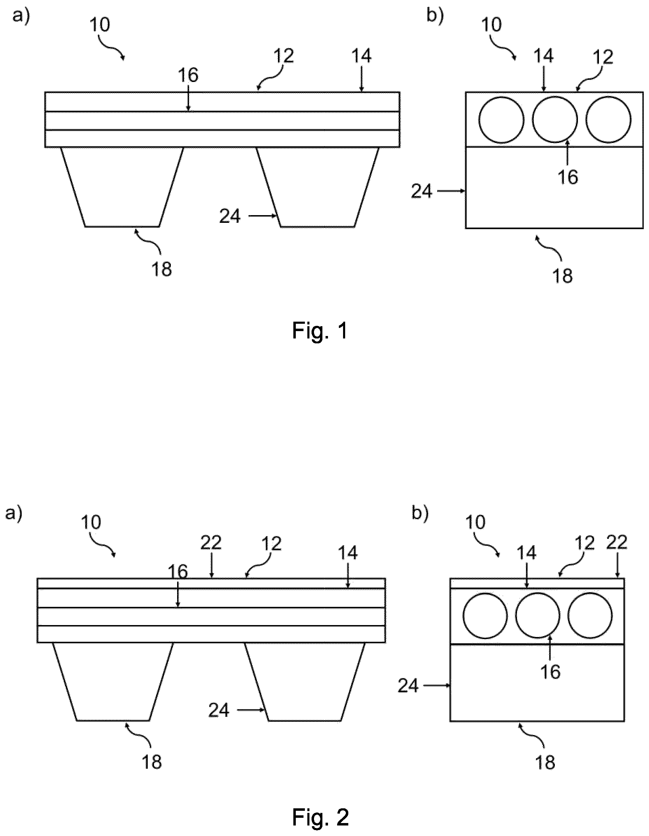

Fig. 1a) und Fig. 1b) zeigen einen erfindungsgemäßen Riemen 10 in unterschiedlichen Querschnittsansichten (entlang der Bahnrichtung und quer zur Bahnrichtung) mit einem soliden Riemenkörper 12, der aus einer Riemenkörpergrundlage 14 besteht.

Der gezeigte Riemen 10 ist ein einseitiger Zahnriemen mit einer Vielzahl von äquidistant zueinander angeordneten und gleichartig ausgeführten Riemenzähnen 24. Die Riemenzähne 24 bestehen im gezeigten Beispiel aus thermoplastischem Polyurethan und bilden gemeinsam eine Kontaktstruktur 18 aus, die mit dem Riemenkörper 12 stoffschlüssig verbunden und für den Kontakt mit Antriebselementen vorgesehen ist.

In der Riemenkörpergrundlage 14 sind im gezeigten Beispiel der Fig. 1a) und der Fig. 1b) insgesamt drei in Bahnrichtung über die gesamte Länge des Riemenkörpers 12 verlaufende Zugträger 16 vollständig in dem ersten Kunststoffmaterial eigebettet angeordnet. Die Zugträger sind als verzinkte Stahlkorde ausgeführt. Das erste Kunststoffmaterial besteht im gezeigten Beispiel aus einem thermoplastischen Polyether-Block-Amid-Copolymer.

In einem Herstellungsprozess des gezeigten Riemens 10 wird die stoffschlüssige Verbindung zwischen Riemenkörper 12 und Kontaktstruktur 18 bevorzugt durch eine Extrusionsbeschichtung der Riemenkörpergrundlage 14 mit dem thermoplastischen Polyurethan der Riemenzähne 24 erreicht.

Fig. 2a) und Fig. 2b) zeigen einen erfindungsgemäßer Riemen 10 in einer weiteren bevorzugten Ausführungsform in unterschiedlichen Querschnittsansichten (entlang der Bahnrichtung und quer zur Bahnrichtung), wobei der Riemenkörper 12 neben der Riemenkörpergrundlage 14 gegenüberliegend von den Riemenzähnen 24 eine zusätzliche Riemenaußenlage 22 umfasst, welche eine Schutzschicht für die unterliegende Riemenkörpergrundlage 14 bildet, wobei hierfür übliche Schutzschichten verwendet werden können.

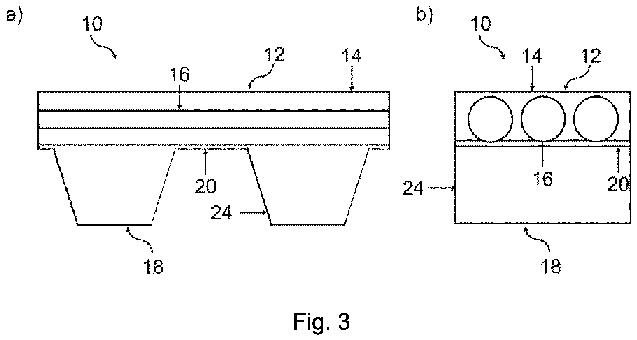

In Fig. 3a) und Fig. 3b) ist ein erfindungsgemäßer Riemen 10 in einer weiteren bevorzugten Ausführungsform in unterschiedlichen Querschnittsansichten (entlang der Bahnrichtung und quer zur Bahnrichtung) gezeigt. Die Kontaktstruktur 18 des Riemens 10 umfasst im gezeigten Beispiel neben den Riemenzähnen 24 eine Zahnverbindungslage 20, welche die Riemenzähne 24 untereinander verbindet und aus dem thermoplastischen Polyurethan der Riemenzähne 24 ausgeführt ist. Die Zugträger 16 werden von der Zahnverbindungslage 20 kontaktiert, sodass die Zugträger 16 vollständig vom thermoplastischen Polyurethan der Zahnverbindungslage 20 und vom thermoplastischen Polyether-Block-Amid-Copolymer der Riemenkörpergrundlage 14 umgeben sind. Der entsprechende Riemen 10 der Fig. 3a) und Fig. 3b) kann besonders effizient durch Extrusionsbeschichtung der Riemenkörpergrundlage 14 mit dem thermoplastischen Polyurethan der Kontaktstruktur 18 und anschließende Ausformung der Riemenzähne 24 mit einem formgebenden Werkzeug ausgeformt werden.

### Bezugszeichenliste

- 10: Riemen
- 12: Riemenkörper
- 14: Riemenkörpergrundlage
- 16: Zugträger
- 18: Kontaktstruktur
- 20: Zahnverbindungslage
- 22: Riemenaußenlage
- 24: Riemenzahn

## Patentansprüche

1. Riemen (10), umfassend:
i) einen Riemenkörper (12) mit einer Riemenkörpergrundlage (14), umfassend in der Riemenkörpergrundlage (14) einen oder mehrere Zugträger (16), wobei der eine oder die mehreren Zugträger (16) jeweils zumindest teilweise in ein erstes Kunststoffmaterial eingebettet sind,
wobei das erste Kunststoffmaterial einen ersten Kunststoff umfasst, der ausgewählt ist aus der Gruppe bestehend aus thermoplastischen Elastomeren, und
ii) eine für den Kontakt mit Antriebselementen vorgesehene und mit dem Riemenkörper (12) verbundene Kontaktstruktur (18), wobei die Kontaktstruktur (18) zumindest teilweise aus einem vom ersten Kunststoffmaterial verschiedenen zweiten Kunststoffmaterial besteht,
wobei das zweite Kunststoffmaterial einen zweiten Kunststoff umfasst, der ausgewählt ist aus der Gruppe bestehend aus thermoplastischen Polyurethanen.

2. Riemen (10) nach Anspruch 1, wobei die von der Kontaktstruktur (18) des Riemens (10) abgewandte Oberfläche des Riemenkörpers (12) durch die Riemenkörpergrundlage (16) gebildet wird, wobei die von der Kontaktstruktur (18) des Riemens (10) abgewandte Oberfläche des Riemenkörpers (12) durch das erste Kunststoffmaterial gebildet wird.

3. Riemen (10) nach einem der Ansprüche 1 oder 2, wobei die Zugträger (16) ausgewählt sind aus der Gruppe bestehend aus metallischen Korden.

4. Riemen (10) nach einem der Ansprüche 1 bis 3, wobei das erste Kunststoffmaterial zu einem Massenanteil von 80 % oder mehr aus dem ersten Kunststoff besteht, bezogen auf die Masse des ersten Kunststoffmaterials.

5. Riemen (10) nach einem der Ansprüche 1 bis 4, wobei der erste Kunststoff ausgewählt ist aus der Gruppe bestehend aus thermoplastischen Polyamidelastomeren (TPE-A) und thermoplastischen Elastomeren auf Urethanbasis (TPE-U).

6. Riemen (10) nach Anspruch 5, wobei der erste Kunststoff ausgewählt ist aus der Gruppe bestehend aus thermoplastischen Polyamidelastomeren (TPE-A).

7. Riemen (10) nach einem der Ansprüche 1 bis 6, wobei das zweite Kunststoffmaterial zu einem Massenanteil von 80 % oder mehr aus dem zweiten Kunststoff besteht, bezogen auf die Masse des zweiten Kunststoffmaterials.

8. Riemen (10) nach einem der Ansprüche 1 bis 7, wobei die Kontaktstruktur (18) stoffschlüssig mit dem Riemenkörper (12) verbunden ist.

9. Riemen (10) nach einem der Ansprüche 1 bis 8, wobei der Riemen ein Zahnriemen ist, wobei die Kontaktstruktur (18) eine Vielzahl von auf der Zahnseite des Riemenkörpers (12) angeordneten Riemenzähnen (24) umfasst, wobei die Riemenzähne (24) bezogen auf deren Anzahl zumindest teilweise aus dem ersten Kunststoffmaterial bestehen.

10. Riemen (10) nach Anspruch 9, wobei die Kontaktstruktur (18) eine Zahnverbindungslage (20) umfasst, wobei die Zahnverbindungslage (20) die Riemenzähne (24) mit anderen Riemenzähnen (24) verbindet, und wobei die Zahnverbindungslage (20) aus dem zweiten Kunststoffmaterial besteht.

11. Riemen (10) nach einem der Ansprüche 1 bis 10, wobei die Zahnverbindungslage (20) den oder die in das erste Kunststoffmaterial eingebetteten Zugträger (16) kontaktiert.

12. Verfahren zur Herstellung eines Riemens (10) nach einem der Ansprüche 1 bis 11, umfassend die Verfahrensschritte:
a) Herstellen oder Bereitstellen einer Riemenkörpergrundlage (14), umfassend einen oder mehrere Zugträger (16), wobei der eine oder die mehreren Zugträger (16) zumindest teilweise in dem ersten Kunststoffmaterial eingebettet sind,
b) Extrudieren des zweiten Kunststoffmaterials auf die Oberfläche der Riemenkörpergrundlage (14).

13. Verfahren nach Anspruch 12, wobei das Extrudieren des zweiten Kunststoffmaterials auf die Oberfläche der Riemenkörpergrundlage (14) zur Ausbildung einer Vielzahl von auf der Zahnseite des Riemenkörpers (12) angeordneten Riemenzähnen (24) erfolgt.

14. Verfahren nach Anspruch 13, wobei das Extrudieren des zweiten Kunststoffmaterials auf die Oberfläche der Riemenkörpergrundlage (14) so erfolgt, dass zwischen den Riemenzähnen (24) eine Zahnverbindungslage (20) ausgebildet wird, wobei die Zahnverbindungslage (20) die Riemenzähne (24) mit anderen Riemenzähnen (24) verbindet.
